# EUROPEAN PATENT SPECIFICATION

(11) **EP 1 220 239 B1**
(45) Date of publication and mention of the grant of the patent: **27.08.2008**
(21) Application number: 00128546.9
(22) Date of filing: 27.12.2000
(51) Int. Cl.: H01B 12/14

(54) **Superconducting cable**
Supraleitendes Kabel
Câble supraconducteur

(43) Date of publication of application: 03.07.2002
(73) Proprietor: Prysmian Cavi e Sistemi Energia S.r.l., 20126 Milano (IT)
(72) Inventor: Spreafico, Sergio, 22036 Erba (CO) (IT)
(74) Representative: Checcacci, Giorgio

(56) References cited:
- DE-A- 2 301 425
- US-A- 3 781 455

## Description

In a general aspect, the present invention relates to a superconducting cable comprising a superconducting conductor and a cryostat.

More particularly, the invention relates to a superconducting cable comprising a superconducting conductor and a cryostat wherein a protecting layer is provided between the superconducting conductor and the cryostat.

The term "superconducting cable" encompasses a cable to be used to transmit current in conditions of so-called superconductivity, i.e. in conditions of almost null electric resistance. See, for example, Engelhardt J. S. et al., Application Consideration for HTSC Power Transmission Cable, 5th Annual Conference on Superconductivity and Application, Buffalo, N.Y., Sept. 24-26, 1991.

The term "superconducting conductor" indicates in the following description and claims any element capable of transmitting electric current in superconductivity conditions, such as, for instance, a layer of superconducting material supported by a tubular core, or tapes of superconducting material partially or totally surrounded by noble metal, which are wound on a supporting core in one or more layers.

The term "superconducting material" indicates a material, for example special ceramics based on mixed oxides of copper, barium and yttrium (usually called YBCO), of bismuth, lead, strontium, calcium, copper (usually called BSCCO), or of thallium or mercury and barium, calcium copper, comprising a superconducting phase having a substantially null resistivity under a given temperature, defined as critical temperature or T_{c}. For example, for the above mentioned materials the T_{c} ranges from about 60 K (-213°C) and about 170 K (-103°C).

Usually the superconducting material, particularly the BSCCO material, is produced and used in form of mono- or multi-superconductor element tapes wherein the material is surrounded by a metal, generally silver optionally added with aluminium or magnesium.

The operative temperature of a superconductive cable is lower the T_{c} of the superconductive material present therein.

The term "operative temperature" indicates in the following the temperature at which the superconducting cable transmit electric current in superconductivity conditions. Specifically such temperature is lower than the T_{c}.

The superconducting cables are provided with at least one channel for the flow of the cryogen. The cryogen is typically liquid helium, liquid nitrogen, liquid hydrogen, liquid argon or mixture thereof, operating at temperature and pressure specific for the application.

For maintaining the superconducting material at the operative temperature a cryostat is provided externally to the superconducting conductor. Such cryostat generally comprises a thermal insulation enclosed in two tubes. The thermal insulation for superconducting cables consists of various materials such as, for example, polyester resin tapes, polytetrafluoroethylene fibres, metallizzed Mylar™. A general review about the cryostat used in the field is IEEE TRANSACTIONS ON POWER DELIVERY, vol. 7, No. 4, October 1992, pages 1745-1753.

The inner and outer tubes are coaxially positioned, respectively, on the inner and outer surface of the thermal insulation. They define the chamber where the thermal insulation is positioned under vacuum. These tubes are generally metal tubes made of fibreglass or stainless steel, the latter being preferably corrugated so as to confer flexibility to the cryostat structure.

The cryostat may be, by means of the inner tube, in direct contact to the superconducting conductor or loosely positioned around it.

The Applicant has found that when the superconducting conductor is or comes into contact - during cable construction, transportation or - installation - with the inner tube of the cryostat, the superconducting material of the external layer, and possibly also of the internal layer(s), may get damaged. The same problems may arise during the operation of the cable. In fact, during the operation of the cable a thermal shrinkage of the cooled elements occurs thus bringing them into mutual contact, especially in curvilinear tracts in the path of the cable. This phenomenon is particularly evident in case of clamped head configuration.

The clamped head configuration indicates a cable configuration wherein opposite ends of the cable are mechanically fixed to respective clamping terminals such that substantially no relative sliding between superconducting material, supports and the terminal themselves takes place in axial direction.

U.S. Patent No. 3,781,455 discloses a low-temperature conductor and a cryostat positioned externally to the conductor, said cryostat including a thermal insulation enclosed between an inner and an outer coaxial tube. The low-temperature conductor is enclosed in a conduit traversed by a low-temperature cryogenic fluid, the low-temperature conductor is thus immersed in the channel wherein the fluid flows. The low-temperature fluid is introduced at intermediate locations along the length of the channel through passages defined between two surfaces of the ends of the tube defining a sheath provided between the conductor and the inner tube of the cryostat. The presence of said passage in the sheath allows the feeding of fluid, without interrupting the outer conduit or exposing the conductor to ambient conditions.

It has been found that providing a protecting element between the superconducting conductor and the inner tube of the cryostat, the damage to the first by the latter is prevented while maintaining the effectiveness of the thermal insulating system.

Therefore the present invention relates to a superconducting cable comprising at least a superconducting conductor and a cryostat positioned externally to the superconducting conductor, said conductor being wound on a support, the inner surface of said support defining a channel wherein a cryogenic fluid flows, and said cryostat including a thermal- insulation enclosed between an inner and an outer coaxial tubes, wherein a protecting element is provided between the superconducting conductor and the inner tube of the cryostat.

The protecting element provided between the superconducting conductor and the inner tube has a substantially constant thickness, such as to uniformly distribute the external pressure over its whole surface.

Preferably, the internal surface of the protecting element, i.e. the surface in contact with the superconducting material, is smooth.

Preferably, the external surface of the protecting element, i.e. the one in contact with the inner tube of the cryostat, is firm and flexible.

Preferably the protecting element is made of two layers, the inner being smooth and the outer being firm and flexible.

The thickness of said protecting element is, preferably, equal or greater than about 0.2 mm. More preferably, it is comprised between about 0.2 mm and about 3 mm, and even more preferably between 0.4 mm and 1 mm.

The protecting element may include one or more layers of at least one tape, wire, sheet or combination thereof. The at least one tape or wire is helically wound on the superconducting conductor, and the at least one sheet is wrapped up on the superconducting conductor.

In order to obtain a thickness as constant as possible, the at least one tape or sheet is preferably positioned with juxtaposed windings or rims on the superconducting conductor.

The protecting element comprises at least one material selected from polymeric materials, e.g. polytetrafluoroethylene (PTFE or Teflon®) or nylon; metals, e.g. copper or stainless steel; carbon paper and kraft paper, and combination thereof. Preferably the protecting element of the invention is made of polymeric material.

Preferably, the superconducting cable of the invention has a clamped head configuration.

The cryogenic fluid useful for the cable of the present invention may be any fluid having, at the operative condition, a transition temperature from liquid to gaseous state higher than the T_{c} of the superconducting material, i.e. liquid helium, liquid nitrogen, liquid hydrogen and/or liquid argon. Preferably, the cable of the invention is cooled with liquid nitrogen at a temperature typically of from about 65 to about 90 K.

The superconducting material of the cable of the present invention may be, for example, an oxide of lanthanum and/or barium and/or strontium, copper (LaSCO) or of bismuth, lead, strontium, calcium, copper (BSCCO), or of yttrium (and/or other rare earth such as Nd, Sm, Eu, Gd), barium, copper (YBCO), or of thallium, barium (and/or strontium), calcium, copper, or of mercury, barium (and/ or strontium), calcium, copper, or of lead, strontium, yttrium, copper.

The superconducting material of the invention may be produced by any of the methods known in the art, for example, by the oxide powder in tube (OPIT) method for the BSCCO, or by that described in US 5,741,377 (in the name of Martin Marietta Corporation) for YBCO.

The tapes may also be mono- or multi-superconductor element, as described in the application EP 747 975 (in the Applicant's name).

In another aspect, the present invention relates to a method for protecting a superconducting cable comprising at least a superconducting conductor and a cryostat positioned externally to the to the superconducting conductor, said conductor being wound on a support, the inner surface of said support defining a channel wherein a cryogenic fluid flows, said cryostat including a thermal insulation enclosed between an inner and an outer coaxial tubes, from the mechanical damages to the superconducting material of the superconducting conductor due to the contact with the inner tube of the cryostat, which comprises the phase of providing a protecting element between the superconducting conductor and the inner tube.

According to a further aspect, the invention relates to a current transmission/distribution network comprising at least one superconducting cable comprising at least a superconducting conductor and a cryostat positioned externally to the to the superconducting conductor, said conductor being wound on a support, the inner surface of said support defining a channel wherein a cryogenic fluid flows, said cryostat including a thermal insulation enclosed between an inner and an outer coaxial tubes, wherein a protecting element provided between the superconducting conductor and the inner tube of the cryostat.

Further features and advantages of the present invention will become more apparent from the following drawings reporting some of the preferred embodiments, which are non-limitative illustrations of the invention.

In the drawings:
- Figure 1 shows a transversal section of a warm dielectric (hereinafter WD) superconducting cable according to the invention;
- Figure 2 is a sketched representation of a longitudinal section of the superconducting conductor, protecting element and inner tube of the cable according to the invention;
- Figure 3 is a layout of the clamped head cooling test effected on the cable of the present invention.

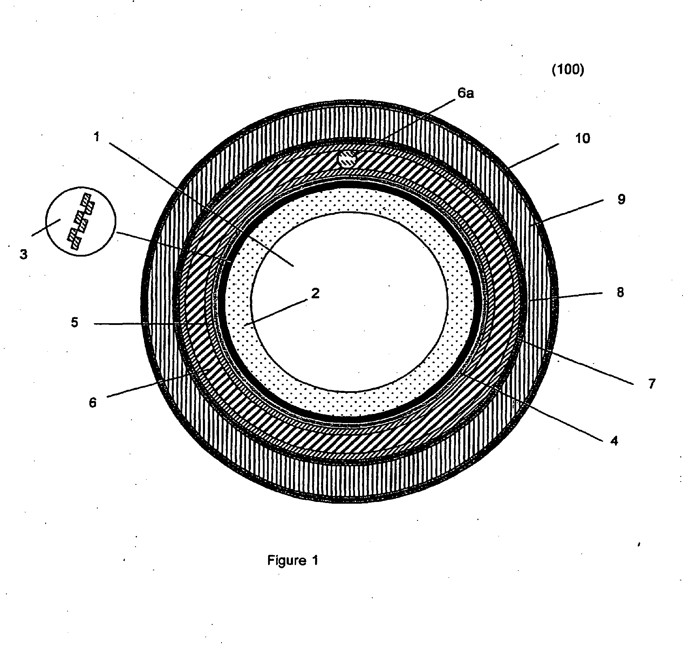

In detail, Fig. 1 shows a specific embodiment of a WD superconducting cable (100) according to the present invention. The superconducting conductor (3) comprises a plurality of superconducting tapes wound on a support (2). The inner surface of the support (2) defines the channel (1) wherein the cryogenic fluid flows.

For reducing as much as possible accidental mechanical internal damages, the superconducting tapes are preferably wound on the support (2) with winding angles comprised between 10° and 60°, such angles being constant or variable for each layer.

The superconducting conductor (3) may be in direct contact with the support (2), or layer(s) of carbon paper may be interposed between the superconducting conductor (3) and the support (2) for minimising mechanical stress among the tapes.

The superconducting conductor (3) is thermally insulated by means of a coaxial cryostat comprising an inner metal tube (5), an outer metal tube (7), and a thermal insulation (6) interposed between said inner and outer tubes.

The metal tubes (5) and (7) are preferably made of a 0.5-mm thick stainless steel tape, more preferably corrugated.

The thermal insulation (6) consists, for example, of surface-metallized polyester resin tapes, known as "thermal superinsulation", loosely wound, possibly interposing spacers (6a) for spacing the metal tubes (5) and (7).

Preferably, such spacers (6a) are placed at 120° each other with respect to the cable transversal section. Moreover they are preferably made of polytetrafluoroethylene.

At the moment of operating the cable, a vacuum of, typically, 10⁻⁶ bar is created in the thermal insulation by means of a vacuum apparatus.

The cryostat is separated from the superconducting conductor (3) by a protecting layer (4). In this embodiment, such layer (4) is made of 4 layers of carbon paper having a thickness of 0.1 mm each (0.4 mm of total thickness).

A first electrostatic shield (8), an electric insulation (9) and a second electrostatic shield (10) are set coaxially externally to the cryostat. Said shields (8) and (10) and the insulation (9) may be lapped or extruded.

In case of lapped electrostatic shields, they may consist of insulating oil-impregnated tapes of various materials such as, for example, smooth or crêpe carbon paper and metallized carbon.

In case of a lapped electric insulation, it may consist of a plurality of layers comprising, for example, paper tapes and/or laminates combining paper layers with plastic layers (e.g. polypropylene layers).

Alternatively, the electrostatic shields (8) and (10) and the electric insulation layer (9) may be obtained by extruding and optionally cross-linking ethylene-propylene rubber (EPR) or polyethylene (XLPE).

In addition, the superconducting cable (100) comprises an external metallic shield (not illustrated) made, for example, of copper tapes and in contact with the second electrostatic shield (10). This external metallic shield is earth connected so as its electric potential and that of the shield (10) are null.

Other protecting layer(s) (not illustrated) may be externally provided for minimising any kind of stress for the cable (100) at the moment of the installation.

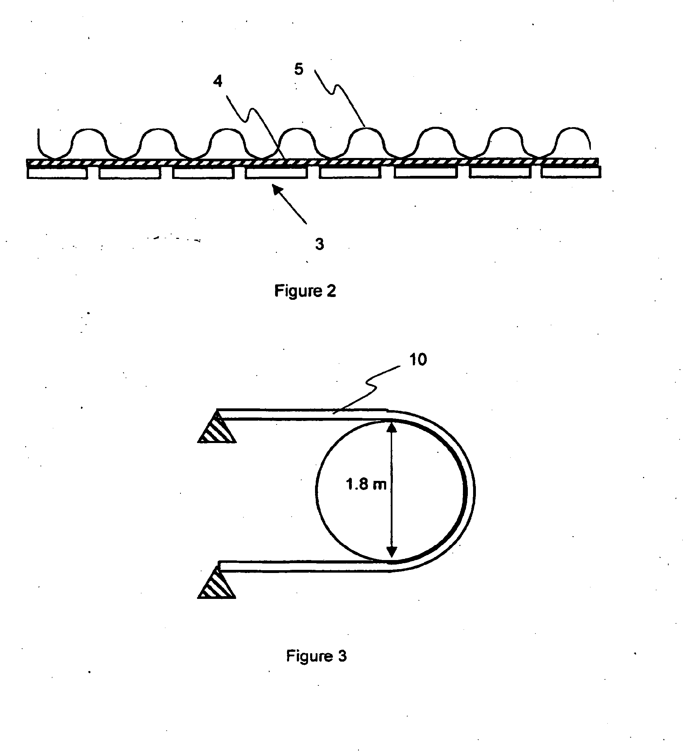

Fig. 2 shows a sketched longitudinal section of the superconducting conductor (3), protecting layer (4) and inner tube (5) of the cable according to the invention, such inner tube (5) being corrugated.

The invention shall be now illustrated by means of non-limitative examples.

### EXAMPLE 1

A WD superconducting cable (100) was prepared having the following features:

| | | |
|---|---|---|
| Support | inner diameter | 22 mm |
| | outer diameter | 28.7 mm |
| Superconducting material | BSCCO-2223 tapes | 5 mm wide |
| | | 0.3 mm thick |
| Superconducting conductor | 2 oppositely helically wound layers | |
| | outer diameter | 30 mm |

Coaxially to the superconducting conductor a cryostat including two corrugated tubes separated by a thermal super-insulation (surface-metallized polyester resin tapes) was positioned having the following characteristics:

| | |
|---|---|
| Inner diameter | 32 mm (measured on the top of the crests) |
| Material | 316 stainless steel |
| Thickness | 0.5 mm |
| Corrugation pitch | 10 mm |
| Corrugation depth | 4 mm |

Multiple (10x) bending test, in dry conditions (i.e. without cryogenic fluid) at room temperature on a diameter of 1.8 m were performed on 5 samples of 10 m-long cables having respectively the following superconducting conductor/inner tube configuration:
a) superconducting conductor in direct contact to the inner tube;
b) superconducting conductor protected by 2 layers of 0.10 mm-thick carbon paper;
c) superconducting conductor protected, sequentially from inside to outside, by 1 layer of 0.10 mm-thick Teflon® (PTFE) and 1 layer of 0.20 mm-thick copper tape;
d) superconducting conductor protected, sequentially from inside to outside, by 1 layer of 0.10 mm-thick carbon paper and 48 wires of tefloned copper having a diameter of 0.5 mm each, and helically wound

The bending test simulated the production and installation steps of the cable.

At the end of the test 3 meters were cut off from the edges of each sample, and the critical current measurement was effected in the central portion of each sample. The measurements of Ic and Ic₀ were carried out at the same point of the sample by the electrical transport 4 probe technique determining the voltage at 1 µV/cm E_{c}.

By measuring the critical current of a tape it is possible to assess a possible degradation of the current transport properties of the superconducting tape.

The results are set forth in the following Table 1, wherein Ic₀ is the value of critical current before effecting the test, Ic is the value of critical current measured following the test. The Ic/Ic₀ ratio is the retention of current after the test.

**Table 1**

| Superconducting conductor/cryostat protecting element | Ic/Ic₀ for the inner superconducting layer | Ic/Ic₀ for the outer superconducting layer |
|---|---|---|
| a) none | 100% | 80% |
| b) 2 layers of carbon paper | 100% | 100% |
| c) 1 layer of PTFE + 1 layer of copper tapes | 100% | 100% |
| d) 1 layer of carbon paper + 48 0.5 mm-thick wires of tefloned copper | 100% | 100% |

A degradation of the current transport capacity for the outer superconducting layer of the configuration a) was observed. This is attributable to the pressure exerted by the contact between the superconducting material and the crests of the corrugated inner tube of the cryostat.

The deposition of a protecting layer between the superconducting conductor and the corrugated inner tube avoids the irreversible damage of the superconducting material.

### EXAMPLE 2

A WD superconducting cable (100) having the characteristics set forth in Example 1 was tested as follows.

Cooling tests in clamped head configuration (see Figure 3) were carried out on 20 m-long samples in U-arrangement under a bending diameter of 1.8 m.

The same superconducting conductor/inner tube configurations a)-d) of Example 1 were tested.

During the cooling, the superconducting conductor should axially contract, but because of the clamped heads, a side pressure generates by the superconducting conductor against the crests of the inner tube.

At the end of the test (i.e. when the total structure of the cable reaches the temperature of 77 K the cooling is stopped and the sample return to the room temperature) the central position (of about 2 m), i.e. the one bent on the 1.8 m diameter, of each sample were cut off, and critical current measurements were carried out thereupon comparing the values obtained before and after the test, as already explained in Example 1. The results are set forth in Table 2.

**Table 2**

| Superconducting conductor/cryostat protecting element | Ic/Ic₀ for the inner superconducting layer | Ic/Ic₀ for the outer superconducting layer |
|---|---|---|
| a) none | 95% | 70% |
| b) 2 layers of carbon paper | 100% | 100% |
| c) 1 layer of PTFE + 1 layer of copper tapes | 100% | 100% |
| d) 1 layer of carbon paper + 48 0.5 mm-thick wires of tefloned copper | 100% | 100% |

The results of this test show that the application of a protecting element between the superconducting conductor and the corrugated inner tube of the cryostat, according to the invention, avoids the irreversible damage to the superconducting material when the thickness of the protecting layer has a certain value.

## Claims

1. Superconducting cable (100) comprising at least a superconducting conductor (3) and a cryostal (5, 6, 7) positioned externally to the superconducting conductor, said conductor being wound on a support, (2) the inner surface of said support defining a channel (1) wherein a cryogenic fluid flows, and said cryostat including a thermal insulation (6) enclosed between an inner (5) and an outer (7) coaxial tube, wherein a protecting element (4) is provided between the superconducting conductor and the inner tube of the cryostat.

2. Superconducting cable according to claim 1 wherein the protecting element provided between the superconducting conductor and the inner tube has a substantially constant thickness.

3. Superconducting cable according to claim 1 wherein the protecting element has a smooth internal surface.

4. Superconducting cable according to claim 1 wherein the protecting element has a firm and flexible external surface.

5. Superconducting cable according to claim 1 wherein the protecting element comprises one or more layers.

6. Superconducting cable according to claim 5 wherein the protecting element is made of two layers, the inner being smooth and the outer being firm and flexible.

7. Superconducting cable according to claim 1 wherein the thickness of the protecting element is equal or greater than about 0.2 mm.

8. Superconducting cable according to claim 7 wherein the thickness of the protecting element is comprised between about 0.2 mm and about 3 mm.

9. Superconducting cable according to claim 8 wherein the thickness of the protecting element is comprised between 0.4 mm and 1 mm.

10. Superconducting cable according to claim 1 wherein the protecting element comprises a material selected from polymeric materials, metals, carbon paper, kraft paper, and combination thereof.

11. Superconducting cable according to claim 10 wherein the protecting element is made of polymeric material.

12. Superconducting cable according to claim 11 wherein the protecting element is made of polytetrafluoroethylene.

13. Superconducting cable according to claim 10 wherein the protecting element is made of copper.

14. Superconducting cable according to claim 5 wherein the layer(s) of the protecting element comprise(s) at least one tape, wire, sheet or combination thereof.

15. Superconducting cable according to claim 14 wherein the at least one tape, or sheet is positioned with juxtaposed windings or rims on the superconducting conductor.

16. Superconducting cable according to claim 1 which has a clamped head configuration.

17. Superconducting cable according to claim 1 which is cooled with liquid nitrogen at a temperature typically of from about 65 to about 90 K.

18. Superconducting cable according to claim 1 wherein the superconducting material is an oxide of bismuth, lead, strontium, calcium, copper.

19. Method for protecting a superconducting cable (100) comprising at least a superconducting conductor (3) and a cryostat (5, 6, 7) positioned externally to the to the superconducting conductor, said conductor being wound on a support (3) the inner surface of said support defining a channel (1) wherein a cryogenic fluid flows, and said cryostat including a thermal insulation (6) enclosed between an inner (5) and an outer (7) coaxial tube, from the mechanical damages to the Superconducting material of the superconducting conductor due to the contact with the inner tube of the cryostat, which comprises the step of providing a protecting element (4) between the superconducting tube.

20. Current tranmistion/distribution network comprising at least one superconducting cable (100) comprising at least a superconducting conductor (3) and a cryostat (5, 6, 7) positioned externally to the to the superconducting conductor, said conductor being wound on a support, (2) the inner surface of said support defining a channel (1) wherein a cryogenic fluid flows, and said cryostat including a thermal insulation (6) enclosed between an inner (5) and an outer coaxial tube, wherein a protecting element (4) provided between the superconducting conductor and the Inner tube of the cryostat.

## Patentansprüche

1. Supraleitendes Kabel (100) umfassend wenigstens einen supraleitenden Leiter (3) und einen Kryostat (5, 6, 7), der außerhalb des supraleitenden Leiters angeordnet ist, wobei der Leiter auf einen Träger (2) gewickelt ist, dessen innere Oberfläche einen Kanal (1) definiert, in dem ein kryogenes Fluid fließt, und wobei der Kryostat eine thermische Isolierung (6) umfaßt, die zwischen einer inneren (5) und einer äußeren (7) koaxialen Röhre eingeschlossen ist, wobei ein Schutzelement (4) zwischen dem supraleitenden Leiter und der inneren Röhre des Kryostats angeordnet ist.

2. Supraleitendes Kabel gemäß Anspruch 1, wobei das Schutzelement, das zwischen dem supraleitenden Leiter und der inneren Röhre angeordnet ist, eine im wesentlichen konstante Dicke aufweist.

3. Supraleitendes Kabel gemäß Anspruch 1, wobei das Schutzelement eine glatte innere Oberfläche aufweist.

4. Supraleitendes Kabel gemäß Anspruch 1, wobei das Schutzelement eine feste und flexible äußere Oberfläche aufweist.

5. Supraleitendes Kabel gemäß Anspruch 1, wobei das Schutzelement eine oder mehrere Schichten umfaßt.

6. Supraleitendes Kabel gemäß Anspruch 5, wobei das Schutzelement aus zwei Schichten bestehend, von denen die innere glatt und die äußere fest und flexibel ist.

7. Supraleitendes Kabel gemäß Anspruch 1, wobei die Dicke des Schutzelements gleich oder größer als etwa 0,2 mm ist.

8. Supraleitendes Kabel gemäß Anspruch 7, wobei die Dicke des Schutzelements zwischen etwa 0,2 mm und etwa 3 mm liegt.

9. Supraleitendes Kabel gemäß Anspruch 8, wobei die Dicke des Schutzelements zwischen 0,4 mm und 1 mm liegt.

10. Supraleitendes Kabel gemäß Anspruch 1, wobei das Schutzelement ein Material ausgewählt aus polymeren Materialien, Metallen, Kohlepapier, Kraftpapier und Kombinationen davon umfaßt.

11. Supraleitendes Kabel gemäß Anspruch 10, wobei das Schutzelement aus polymerem Material hergestellt ist.

12. Supraleitendes Kabel gemäß Anspruch 11, wobei das Schutzelement aus Polytetrafluorethylen hergestellt ist.

13. Supraleitendes Kabel gemäß Anspruch 10, wobei das Schutzelement aus Kupfer hergestellt ist.

14. Supraleitendes Kabel gemäß Anspruch 5, wobei die Schicht(en) des Schutzelements wenigstens ein Band, einen Draht, eine Bahn oder Kombinationen davon umfaßt/umfassen.

15. Supraleitendes Kabel gemäß Anspruch 14, wobei das wenigstens eine Band oder die Bahn zwischen nebeneinanderliegenden Windungen oder Rändern auf dem supraleitenden Leiter angeordnet ist.

16. Supraleitendes Kabel gemäß Anspruch 1, das eine geklammerte Kopfanordnung aufweist.

17. Supraleitendes Kabel gemäß Anspruch 1, das mit flüssigem Stickstoff bei einer Temperatur von typischerweise etwa 65 bis etwa 90 K gekühlt ist.

18. Supraleitendes Kabel gemäß Anspruch 1, wobei das supraleitende Material ein Oxid von Wismut, Blei, Strontium, Calcium, Kupfer ist.

19. Verfahren zum Schützen eines supraleitenden Kabels (100) umfassend wenigstens einen supraleitenden Leiter (3) und einen Kryostat (5, 6, 7), der außerhalb des supraleitenden Leiters angeordnet ist, wobei der Leiter auf einen Träger (2) gewickelt ist, dessen innere Oberfläche einen Kanal (1) definiert, in dem ein kryogenes Fluid fließt, und wobei der Kryostat eine thermische Isolierung (6) aufweist, die zwischen einer inneren (5) und einer äußeren (7) koaxialen Röhre eingeschlossen ist, vor mechanischer Beschädigung des supraleitenden Materials des supraleitenden Leiters aufgrund von Kontakt mit der inneren Röhre des Kryostats, welches die Schritte des Bereitstellens eines Schutzelements (4) zwischen dem supraleitenden Leiter und der inneren Röhre umfaßt.

20. Stromdurchleitung/-verteilungsnetzwerk umfassend wenigstens ein supraleitendes Kabel (100) umfassend wenigstens einen supraleitenden Leiter (3) und einen Kryostat (5, 6, 7), der außerhalb des supraleitenden Leiters angeordnet ist, wobei der Leiter auf einen Träger (2) gewickelt ist, dessen innere Oberfläche einen Kanal (1) definiert, in dem ein kryogenes Fluid fließt, und wobei der Kryostat eine thermische Isolierung (6) umfaßt, die zwischen einer inneren (5) und einer äußeren (7) koaxialen Röhre eingeschlossen ist, wobei ein Schutzelement (4) zwischen dem supraleitenden Leiter und der inneren Röhre des Kryostats angeordnet ist, umfaßt.

## Revendications

1. Câble supraconducteur (100), qui comprend au moins un conducteur supraconducteur (3) et un cryostat (5, 6, 7), en situation extérieure par rapport au conducteur supraconducteur, lequel conducteur est enroulé sur un support (2) dont la surface interne définit un chenal (1) dans lequel coule un fluide cryogénique, lequel cryostat comprend un isolant thermique (6) enfermé entre un tube intérieur (5) et un tube extérieur (7) coaxiaux, et dans lequel câble il y a un élément protecteur (4) disposé entre le conducteur supraconducteur et le tube intérieur du cryostat.

2. Câble supraconducteur conforme à la revendication 1, dans lequel l'élément protecteur disposé entre le conducteur supraconducteur et le tube intérieur du cryostat présente une épaisseur sensiblement constante.

3. Câble supraconducteur conforme à la revendication 1, dans lequel l'élément protecteur présente une surface interne lisse.

4. Câble supraconducteur conforme à la revendication 1, dans lequel l'élément protecteur présente une surface externe ferme et flexible.

5. Câble supraconducteur conforme à la revendication 1, dans lequel l'élément protecteur comporte une couche ou plusieurs couches.

6. Câble supraconducteur conforme à la revendication 5, dans lequel l'élément protecteur est constitué de deux couches, à savoir une couche interne qui est lisse et une couche externe qui est ferme et flexible.

7. Câble supraconducteur conforme à la revendication 1, dans lequel l'épaisseur de l'élément protecteur est supérieure ou égale à environ 0,2 mm.

8. Câble supraconducteur conforme à la revendication 7, dans lequel l'épaisseur de l'élément protecteur vaut d'environ 0,2 mm à environ 3 mm.

9. Câble supraconducteur conforme à la revendication 8, dans lequel l'épaisseur de l'élément protecteur vaut de 0,4 mm à 1 mm.

10. Câble supraconducteur conforme à la revendication 1, dans lequel l'élément protecteur comprend un matériau choisi parmi les matériaux polymères, les métaux, les papiers carbone, les papiers Kraft, et les combinaisons de tels matériaux.

11. Câble supraconducteur conforme à la revendication 10, dans lequel l'élément protecteur est fait d'un matériau polymère.

12. Câble supraconducteur conforme à la revendication 11, dans lequel l'élément protecteur est en polytétrafluoroéthylène.

13. Câble supraconducteur conforme à la revendication 10, dans lequel l'élément protecteur est en cuivre.

14. Câble supraconducteur conforme à la revendication 5, dans lequel la couche ou les couches de l'élément protecteur comporte(nt) au moins un ruban, un fil ou une feuille, ou une combinaison de tels objets

15. Câble supraconducteur conforme à la revendication 14, dans lequel ledit ruban ou ladite feuille au nombre d'au moins un(e) est disposé(e) sur le conducteur supraconducteur en enroulements juxtaposés ou avec des rebords juxtaposés.

16. Câble supraconducteur conforme à la revendication 1, dont les extrémités sont prises dans des pinces de fixation.

17. Câble supraconducteur conforme à la revendication 1, qui est refroidi au moyen d'azote liquide dont la température vaut d'environ 65 K à environ 90 K.

18. Câble supraconducteur conforme à la revendication 1, dans lequel le matériau supraconducteur est un oxyde de bismuth, plomb, strontium, calcium et cuivre.

19. Procédé permettant de protéger un câble supraconducteur (100), qui comprend au moins un conducteur supraconducteur (3) et un cryostat (5, 6, 7), en situation extérieure par rapport au conducteur supraconducteur, lequel conducteur est enroulé sur un support (2) dont la surface interne définit un chenal (1) dans lequel coule un fluide cryogénique, et lequel cryostat comprend un isolant thermique (6) enfermé entre un tube intérieur (5) et un tube extérieur (7) coaxiaux, contre les dommages mécaniques causés, dans le matériau supraconducteur du conducteur supraconducteur, par contact de celui-ci avec le tube intérieur du cryostat, lequel procédé comprend une étape où l'on dispose un élément protecteur (4) entre le conducteur supraconducteur et le tube intérieur du cryostat.

20. Réseau de transport et de distribution de courant, comprenant au moins un câble supraconducteur (100), qui comprend au moins un conducteur supraconducteur (3) et un cryostat (5, 6, 7), en situation extérieure par rapport au conducteur supraconducteur, lequel conducteur est enroulé sur un support (2) dont la surface interne définit un chenal (1) dans lequel coule un fluide cryogénique, lequel cryostat comprend un isolant thermique (6) enfermé entre un tube intérieur (5) et un tube extérieur (7) coaxiaux, et dans lequel câble il y a un élément protecteur (4) disposé entre le conducteur supraconducteur et le tube intérieur du cryostat.
